# EUROPEAN PATENT APPLICATION

(11) **EP 1 674 749 A1**
(43) Date of publication of application: **28.06.2006**
(21) Application number: 05111236.5
(22) Date of filing: 24.11.2005
(51) Int. Cl.: F16D 3/06, F16C 3/03, B23P 15/00

(54) **Method of manufacturing a sliding spline type of slip joint**

(30) Priority: 21.12.2004 US 18396
(71) Applicant: DANA CORPORATION, Toledo, OH 43615 (US)
(72) Inventor: Keller, Thomas J., Bristol, VA Virginia 24202 (US)
(74) Representative: Franzolin, Luigi

(57) **Abstract**

First and second splined members (17, 18) are manufactured for use in a slip joint by initially providing a first member (17) having a first plurality of splines (17a) thereon and a second member (18) having a second plurality of splines (18a) thereon. The second plurality of splines defines a shape. A coating (20) of a material, such as a low friction material, is provided on the first plurality of splines (17a) of the first member (17). The shape of the second plurality of splines (18a) on the second splined member (18) is next measured, such as by using a digital spline gauge (22). Then, the shape of the coating (20) of the material provided on the first plurality of splines (17a) of the first member (17) is conformed in accordance with the measured shape of the second plurality of splines (18a) of the second member (18), such as by using a lathe. As a result, a precise spacing or gap between the splined portions of the first and second members (17, 18) can be achieved that minimizes the amount of backlash and broken back therebetween.

## Description

### BACKGROUND OF THE INVENTION

This invention relates in general to methods of manufacturing slip joints that are capable of providing a rotational driving connection between first and second members, while accommodating a limited amount of relative axial movement therebetween. In particular, this invention relates to an improved method of manufacturing a sliding spline type of slip joint that has a coating of a low friction material provided on at least one of the splined members.

Drive train systems are widely used for generating power from a source and for transferring such power from the source to a driven mechanism. Frequently, the source generates rotational power, and such rotational power is transferred from the source to a rotatably driven mechanism. For example, in most land vehicles in use today, an engine/transmission assembly generates rotational power, and such rotational power is transferred from an output shaft of the engine/transmission assembly through a driveshaft assembly to an input shaft of an axle assembly so as to rotatably drive the wheels of the vehicle. To accomplish this, a typical driveshaft assembly includes a hollow cylindrical driveshaft tube having a pair of end fittings, such as a pair of tube yokes, secured to the front and rear ends thereof. The front end fitting forms a portion of a front universal joint that connects the output shaft of the engine/transmission assembly to the front end of the driveshaft tube. Similarly, the rear end fitting forms a portion of a rear universal joint that connects the rear end of the driveshaft tube to the input shaft of the axle assembly. The front and rear universal joints provide a rotational driving connection from the output shaft of the engine/transmission assembly through the driveshaft tube to the input shaft of the axle assembly, while accommodating a limited amount of angular misalignment between the rotational axes of these three shafts.

Not only must a typical drive train system accommodate a limited amount of angular misalignment between the source of rotational power and the rotatably driven device, but it must also typically accommodate a limited amount of relative axial movement therebetween. For example, in most vehicles, a small amount of relative axial movement frequently occurs between the engine/transmission assembly and the axle assembly when the vehicle is operated. To address this, it is known to provide a slip joint in the driveshaft assembly. A typical slip joint includes first and second members that have respective structures formed thereon that cooperate with one another for concurrent rotational movement, while permitting a limited amount of axial movement to occur therebetween.

A typical sliding spline type of slip joint includes male and female members having respective pluralities of splines formed thereon. The male member is generally cylindrical in shape and has a plurality of outwardly extending splines formed on the outer surface thereof. The male member may be formed integrally with or secured to an end of the driveshaft assembly described above. The female member, on the other hand, is generally hollow and cylindrical in shape and has a plurality of inwardly extending splines formed on the inner surface thereof. The female member may be formed integrally with or secured to a yoke that forms a portion of one of the universal joints described above. To assemble the slip joint, the male member is inserted within the female member such that the outwardly extending splines of the male member cooperate with the inwardly extending splines of the female member. As a result, the male and female members are connected together for concurrent rotational movement. However, the outwardly extending splines of the male member can slide axially relative to the inwardly extending splines of the female member to allow a limited amount of relative axial movement to occur between the engine/transmission assembly and the axle assembly of the drive train system.

As is well known in the art, either or both of the male and female splined members may be coated with a material having a relatively low coefficient of friction. The low friction coating is provided to minimize the amount of force that is necessary to effect relative axial movement between the male and female splined members. In addition, the low friction coating is provided to minimize the amount of undesirable looseness between the cooperating splines of the male and female splined members. Looseness that occurs in the rotational direction of the splined members, wherein one of the splined members can rotate relative to the other splined member, is referred to as backlash. Looseness that occurs in the axial direction of the splined members, wherein one of the splined members can extend at a cantilevered angle relative to the other splined member, is referred to as broken back.

Although slip joints that have been manufactured in accordance with known methods have functioned satisfactorily, it has been found that undesirably large gaps can still exist between adjacent splines formed on the cooperating members of the slip joint, even after the coating of the low friction material has been applied. These gaps can occur as a result of manufacturing tolerances in the formation of the splines of the male and female members and can result in an undesirable amount of backlash and broken back therebetween. Thus, it would be desirable to provide an improved method of manufacturing a sliding spline type of slip joint having a coating of a low friction material provided on at least one of the splined members that minimizes the amount of backlash and broken back therebetween.

### SUMMARY OF THE INVENTION

This invention relates to an improved method of manufacturing first and second splined members for use in a slip joint. Initially, a first member having a first plurality of splines thereon and a second member having a second plurality of splines thereon are provided. The second plurality of splines defines a shape. A coating of a material, such as a low friction material, is provided on the first plurality of splines of the first member. The shape of the second plurality of splines on the second splined member is next measured, such as by using a digital spline gauge. Then, the shape of the coating of the material provided on the first plurality of splines of the first member is conformed in accordance with the measured shape of the second plurality of splines of the second member, such as by using a lathe or an outer diameter grinder. As a result, a precise spacing or gap between the splined portions of the first and second members can be achieved that minimizes the amount of broken back therebetween.

Various objects and advantages of this invention will become apparent to those skilled in the art from the following detailed description of the preferred embodiments, when read in light of the accompanying drawings.

### BRIEF DESCRIPTION OF THE DRAWINGS

Fig. 1 is a schematic side elevational view of a vehicular drive train system including a slip joint that has been manufactured in accordance with the method of this invention.
Fig. 2 is an enlarged exploded perspective view of the male and female splined members of the slip joint illustrated in Fig. 1.
Fig. 3 is a sectional elevational view of the male and female splined members illustrated in Fig. 2, together with an apparatus for measuring an inner surface of the female splined member and for machining an outer surface of the male splined member in accordance with a first embodiment of the method of this invention.
Fig. 4 is a sectional elevational view of the male and female splined members illustrated in Fig. 2, together with an apparatus for measuring an outer surface of the male splined member and for machining an inner surface of the female splined member in accordance with a second embodiment of the method of this invention.

### DETAILED DESCRIPTION OF THE PREFERRED EMBODIMENTS

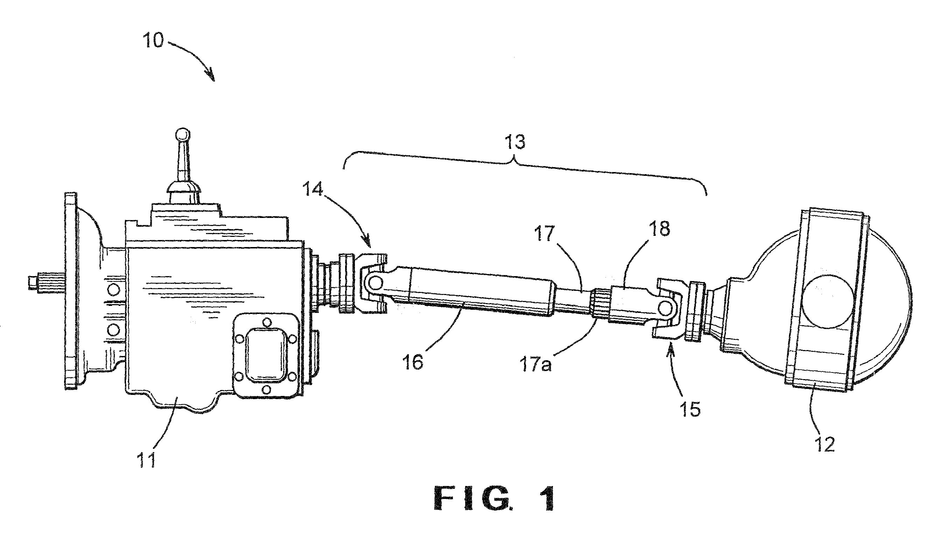

Referring now to the drawings, there is illustrated in Fig. 1 a vehicle drive train system, indicated generally at 10, in accordance with this invention. The illustrated vehicle drive train system 10 is, in large measure, conventional in the art and is intended merely to illustrate one environment in which this invention may be used. Thus, the scope of this invention is not intended to be limited for use with the specific structure for the vehicle drive train system 10 illustrated in Fig. 1 or with vehicle drive train systems in general. On the contrary, as will become apparent below, this invention may be used in any desired environment for the purposes described below.

The illustrated vehicle drive train system 10 includes a transmission 11 having an output shaft (not shown) that is connected to an input shaft (not shown) of an axle assembly 12 by a driveshaft assembly 13. The transmission 11 and the axle assembly 12 are conventional in the art. The driveshaft assembly 13 has a first end that is connected to the output shaft of the transmission 11 by a first universal joint assembly, indicated generally at 14. The driveshaft assembly 13 has a second end that is connected to the input shaft of the axle assembly 12 by a second universal joint assembly, indicated generally at 15.

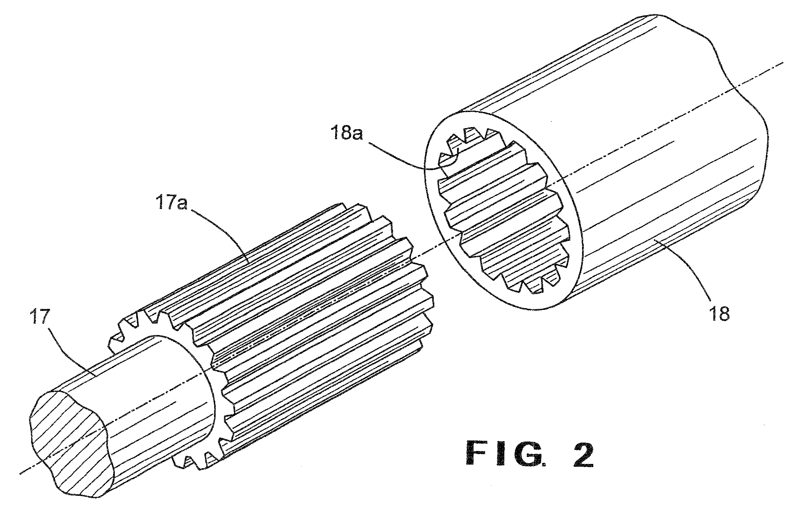

The illustrated driveshaft assembly 13 includes a hollow cylindrical driveshaft tube 16 and a slip tube shaft 17. The driveshaft tube 16 has a first end that is connected to the first universal joint assembly 14 and a second end that is connected to a first end of the slip tube shaft 17. The second end of the slip tube shaft 17 is formed or otherwise provided with a plurality of external or male splines 17a. The splined end 17a of the slip tube shaft 17 extends within a hollow end portion of a slip yoke 18 that forms a part of the second universal joint assembly 15. The hollow end portion of the slip yoke 18 has a corresponding plurality of internal or female splines 24 (see Fig. 2) formed or otherwise provided therein. In a manner that is well known in the art, the external splines 17a provided on the slip tube shaft 17 cooperate with the internal splines 18a provided on the slip yoke 18 to function as a slip joint, wherein a rotational driving connection is provided between the slip tube shaft 17 and the slip yoke 18, while accommodating a limited amount of relative axial movement therebetween.

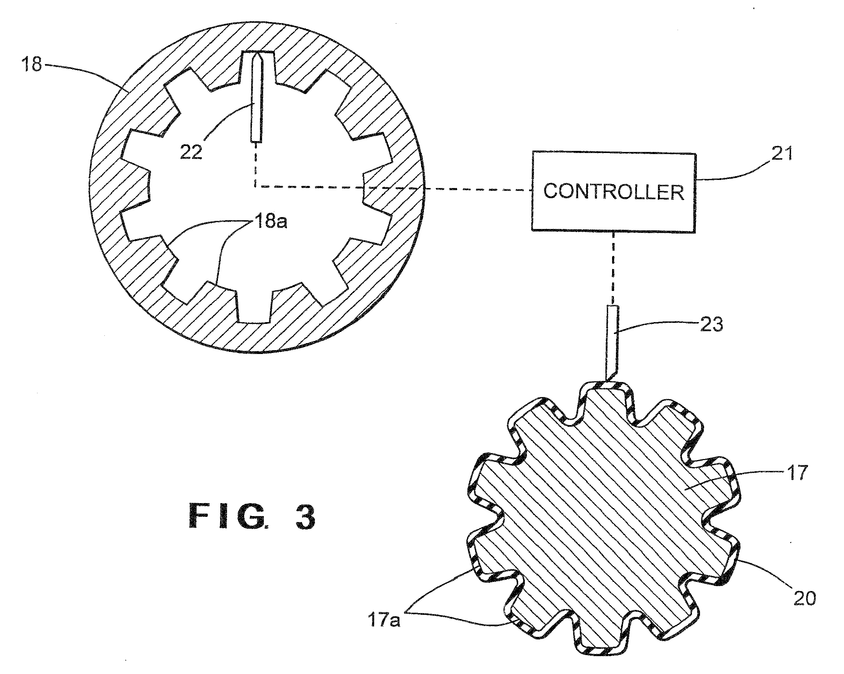

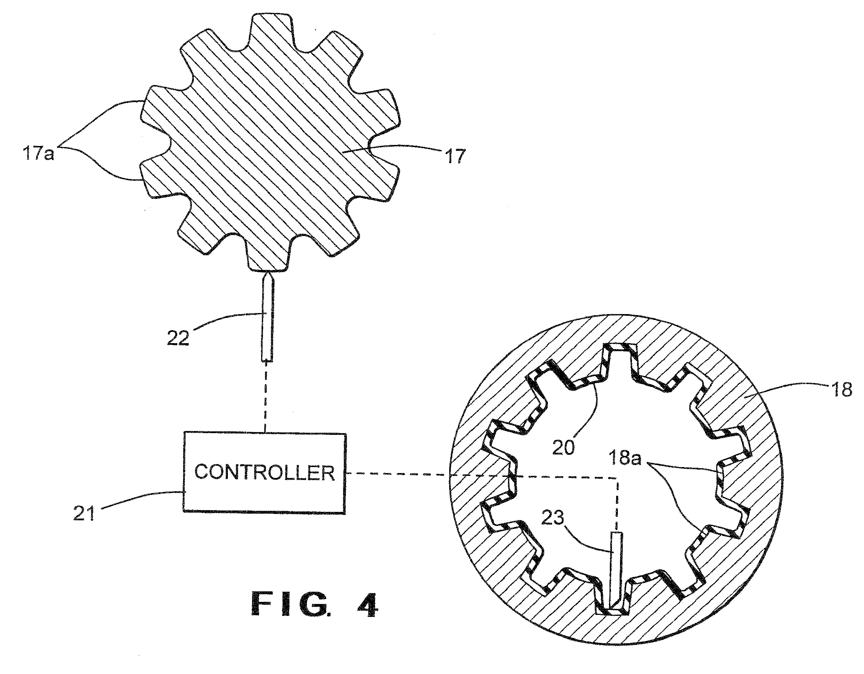

As is well known in the art, either the external splines 17a provided on the slip tube shaft 17 or the internal splines 18a provided on the slip yoke 18 (or both, if desired) may be provided with a coating 20 of a material having a relatively low coefficient of friction. In the first embodiment of this invention illustrated in Fig. 3, the coating 20 is provided on the external splines 17a of the slip tube shaft 17. In the second embodiment of this invention illustrated in Fig. 4, the coating 20 is provided on the internal splines 18a of the slip yoke 18. The coating 20 may be formed from any desired material and may be applied to the external splines 17a of the slip tube shaft 17 or to the internal splines 18a of the slip yoke 18 in any desired manner.

As discussed above, the low friction coating 20 is provided to minimize the amount of force that is necessary to effect relative axial movement between the external splines 17a provided on the slip tube shaft 17 and the internal splines 18a provided on the female yoke 18. In addition, the low friction coating 20 minimizes the amount of undesirable looseness between the cooperating splines 17a and 18a of these male and female splined members 17 and 18, respectively. As previously mentioned, looseness that occurs in the rotational direction of the male and female splined members 17 and 18, wherein one of the splined members can rotate relative to the other splined member, is referred to as backlash. Looseness that occurs in the axial direction of the splined members 17 and 18, wherein one of the splined members can extend at a cantilevered angle relative to the other splined member, is referred to as broken back.

Generally speaking, this invention contemplates that for each pair of the male and female splined members 17 and 18 that cooperate to form a slip joint, the coating 20 is applied to the splines on one of the male and female splined members 17 and 18, and that the shape of this coating 20 is caused to conform with the shape of the splines on the other of the male and female splined members 17 and 18. This is accomplished by measuring the shape of the uncoated splines and conforming the shape of the coating of the material provided on the coated splines with the measured shape of the uncoated splines. In this manner, the shape of the coated splines can conform precisely with the shape of the uncoated splines so as to always provide a predetermined clearance therebetween, regardless of variances in the sizes of the two splined members caused by manufacturing tolerances. Consequently, undesirable broken back between the male and female splined members 17 and 18 is minimized.

Fig. 3 illustrates the first embodiment of this invention, wherein the coating is provided on the external splines 17a of the slip tube shaft 17. A controller 21 may be embodied as any conventional device, such as a programmable controller or a microprocessor, that is capable of performing two basic operations. First, the controller 21 measures the shape of the uncoated internal splines 18a of the slip yoke 18. Second, the controller 21 conforms the shape of the coating 20 of the material provided on the coated external splines 17a of the slip tube shaft 17 in accordance with the measured shape of the uncoated internal splines 18a of the slip yoke 18.

To accomplish the first operation, the controller 21 may be provided with or connected to a sensor 22. The sensor 22 is conventional in the art and is intended to represent any device that is capable of measuring the shape of any or all of the internal splines 18a of the slip yoke 18. For example, the sensor 22 may be a conventional digital spline gauge. In the illustrated embodiment, the sensor 22 measures the shapes of the surfaces of the internal splines 18a of the slip yoke 18 that define the major diameter thereof. However, the sensor 22 can be used to measure any desired portion or portions of the internal splines 18a of the slip yoke 18. The illustrated sensor 22 converts the sensed shapes of the surfaces of the internal splines 18a of the slip yoke 18 into electrical signals that are transmitted to the controller 21. However, the sensed shapes of the surfaces of the internal splines 18a of the slip yoke 18 can be transmitted to the controller 21 in any desired manner or format.

To accomplish the second operation, the controller 21 may be provided with or connected to a reshaping device 23. The reshaping device is conventional in the art and is intended to represent any device that is capable of conforming the coating 20 of the material provided on the coated external splines 17a of the slip tube shaft 17 with the measured shape of the uncoated internal splines 18a of the slip yoke 18. For example, the reshaping device may be a conventional lathe or outer diameter grinder. In the illustrated embodiment, the reshaping device 23 conforms the shapes of the coating provided on the surfaces of the external splines 17a of the slip tube shaft 17 that define the major diameter thereof. The illustrated reshaping device 23 is responsive to the sensed major diameter surfaces of the internal splines 18a of the slip yoke 18 for removing portions of the coating 20 so that the shape of such coating 20 conforms with the sensed major diameter surfaces of the internal splines 18a of the slip yoke 18. However, the coating 20 can be conformed with the sensed shapes of the internal splines 18a of the slip yoke 18 in any desired manner or format or to provide any desired clearance between the slip tube shaft 17 and the slip yoke 18.

Fig. 4 illustrates the second embodiment of this invention, wherein the coating is provided on the internal splines 18a of the slip yoke 18. A controller 21 may be embodied as any conventional device, such as a programmable controller or a microprocessor, that is capable of performing two basic operations. First, the controller 21 measures the shape of the uncoated external splines 17a of the slip tube shaft 17. Second, the controller 21 conforms the shape of the coating 20 of the material provided on the coated internal splines 18a of the slip yoke 18 in accordance with the measured shape of the uncoated external splines 17a of the slip tube shaft 17.

To accomplish the first operation, the controller 21 may be provided with or connected to a sensor 22. The sensor 22 is conventional in the art and is intended to represent any device that is capable of measuring the shape of any or all of the external splines 17a of the slip tube shaft 17. For example, the sensor 22 may be a conventional digital spline gauge. In the illustrated embodiment, the sensor 22 measures the shapes of the surfaces of the external splines 17a of the slip tube shaft 17 that define the major diameter thereof. However, the sensor 22 can be used to measure any desired portion or portions of the external splines 17a of the slip tube shaft 17. The illustrated sensor 22 converts the sensed shapes of the surfaces of the external splines 17a of the slip tube shaft 17 into electrical signals that are transmitted to the controller 21. However, the sensed shapes of the surfaces of the external splines 17a of the slip tube shaft 17 can be transmitted to the controller 21 in any desired manner or format.

To accomplish the second operation, the controller 21 may be provided with or connected to a reshaping device 23. The reshaping device is conventional in the art and is intended to represent any device that is capable of conforming the coating 20 of the material provided on the coated internal splines 18a of the slip yoke 18 with the measured shape of the uncoated external splines 17a of the slip tube shaft 17. For example, the reshaping device may be a conventional lathe or internal diameter grinder. In the illustrated embodiment, the reshaping device 23 conforms the shapes of the coating provided on the surfaces of the internal splines 18a of the slip yoke 18 that define the major diameter thereof. The illustrated reshaping device 23 is responsive to the sensed major diameter surfaces of the external splines 17a of the slip tube shaft 17 for removing portions of the coating 20 so that the shape of such coating 20 conforms with the sensed major diameter surfaces of the external splines 17a of the slip tube shaft 17. However, the coating 20 can be conformed with the sensed shapes of the external splines 17a of the slip tube shaft 17 in any desired manner or format or to provide any desired clearance between the slip tube shaft 17 and the slip yoke 18.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A method of manufacturing first and second splined members for use in a slip joint comprising the steps of:
(a) providing a first member having a first plurality of splines thereon;
(b) providing a second member having a second plurality of splines thereon, said second plurality of splines defining a shape;
(c) providing a coating of a material on the first plurality of splines of the first member;
(d) measuring the shape of the second plurality of splines on the second splined member; and
(e) conforming the shape of the coating of the material provided on the first plurality of splines of the first member in accordance with the measured shape of the second plurality of splines of the second member.

2. The method defined in Claim 1 wherein said step (a) is performed by providing a first member having a first plurality of external splines thereon, and wherein said step (b) is performed by providing a second member having a second plurality of internal splines thereon.

3. The method defined in Claim 2 wherein said step (d) is performed by measuring the shapes of the surfaces of the second plurality of splines on the second member that define the major diameter thereof.

4. The method defined in Claim 3 wherein said step (e) is performed by conforming the shape of the coating of the material provided on the surfaces of the first plurality of splines of the first member that define the major diameter thereof.

5. The method defined in Claim 1 wherein said step (a) is performed by providing a first member having a first plurality of internal splines thereon, and wherein said step (b) is performed by providing a second member having a second plurality of external splines thereon.

6. The method defined in Claim 5 wherein said step (d) is performed by measuring the shapes of the surfaces of the second plurality of splines on the second member that define the major diameter thereof.

7. The method defined in Claim 6 wherein said step (e) is performed by conforming the shape of the coating of the material provided on the surfaces of the first plurality of splines of the first member that define the major diameter thereof.

8. The method defined in Claim 1 wherein said step (c) is performed by providing a coating of a low friction material on the first plurality of splines of the first member.

9. The method defined in Claim 1 wherein said step (d) is performed by providing a sensor for generating a signal that represents the shape of the second plurality of splines on the second splined member, and wherein said step (e) is performed by operating a reshaping device in response to the signal from the sensor to conform the shape of the coating.

10. The method defined in Claim 1 wherein said step (d) is performed by providing a digital spline gauge for generating a signal that represents the shape of the second plurality of splines on the second splined member, and wherein said step (e) is performed by operating a lathe in response to the signal from the sensor to conform the shape of the coating.
